# EUROPEAN PATENT SPECIFICATION

(11) **EP 4 508 467 B1**
(45) Date of publication and mention of the grant of the patent: **10.12.2025**
(21) Application number: 24755680.6
(22) Date of filing: 18.07.2024
(51) Int. Cl.: G01T 1/17, G01T 1/185

(54) **DEVICE FOR DETECTING LOW-INTENSITY ALPHA PARTICLES**
VORRICHTUNG ZUR DETEKTION VON ALPHA-PARTIKELN MIT GERINGER INTENSITÄT
DISPOSITIF DE DÉTECTION DE PARTICULES ALPHA DE FAIBLE INTENSITÉ

(30) Priority: 05.02.2024 LV 240010
(43) Date of publication of application: 19.02.2025
(73) Proprietor: SAF TEHNIKA, AS, 1005 Riga (LV)
(72) Inventor: LIEPKALNS, Didzis, 1005 Riga (LV)
(74) Representative: Fortuna, Jevgenijs
(86) International application number: PCT/LV2024/050009
(87) International publication number: WO 2024/232748

(56) References cited:
- CN-A- 1 811 376
- CN-U- 216 351 253
- US-A- 3 984 690

## Description

### Technical Field

The invention relates to devices for the radiation detection and analysis, in particular, to portable *alpha* particle sensors adapted for the identification and quantification of radioactive decay products - *alpha* particles.

### Background of the invention

*Alpha* particles are one type of the ionizing radiation, they are helium atomic nuclei that are emitted in specific radioactive decay processes. For their detection and measurement various types of sensors are used comprising ionization chambers, scintillation detectors, and semiconductor detectors, which are used to detect and analyse radioactive radiation sources. Traditional *alpha* particle detectors are usually stationary and require an external power supply, which limits their application spectrum to particularly remote or hard-to-reach locations.

The concept of using an ionization chamber to detect *alpha* particles and measure radiation intensity is a known principle in nuclear physics and radiation detection technology. An ionization chamber works by ionizing the gas in the chamber when radiation, such as *alpha* particles, passes through it. The ionization event leads to the release of electrons and positively charged ions that can be detected as an electrical signal.

An X-ray and *gamma* radiation detection device is known comprising an ionization chamber detector. The detector is connected to an electrometer-level preamplifier circuit, which in turn is coupled with ranging, auto-zeroing circuits and a microcontroller. The range switching circuit comprising a relay, triodes, resistors as well as a capacitor. The known device allows for the creation of two-level X-ray and gamma-ray detection circuits that switch [1].

A mobile ionization chamber is known which is designed to monitor how much radiation from an x-ray source is delivered to x-ray film. The ionization chamber, along with the portable power supply, is housed in an insulated enclosure to minimize electrical hazards to the patient and operator involved in the X-ray procedure [2].

An *alpha* particle detection device [3] is known comprising an ionization chamber with a plurality of holes for air circulation and means for applying a voltage to produce an electric field. The device also includes main and secondary probes that absorb ion charge and leakage current, as well as a guard band. The device also comprises two preamplifiers and a differential amplifier that amplifies the signal and eliminates noise.

There is known an alpha surface pollution-surveying instrument that features a flexible air-pumping pipe connected to a fan and an ionization chamber, with the fan powered by a power supply. The ionization chamber's electrode plate connects to the power supply and an I-V converter, which links to an A/D converter and then to a single-chip computer. The computer interfaces with a keyboard, alarm, and memory, while the power supply also connects to the A/D converter [4].

### Brief summary of the invention

The present invention is a battery-powered pulse ionization chamber *alpha* particle sensor comprising at least one electric battery, at least one switch S, a voltage converter DC/DC, a capacitor C, a processor MCU, a current pulse amplifier A, an ionization chamber K wherein electrode with zero potential is inserted. The ionization chamber K is designed with the possibility of placing a source of *alpha* particles in it. Furthermore at least one electric battery is electrically connected to the voltage converter DC/DC by means of a switch S, the operation of which is controllable by the processor MCU. The voltage converter DC/DC is electrically connected to the capacitor C and the ionization chamber K. The electrode of the ionization chamber K is electrically connected to the processor MCU via the current pulse amplifier A. In addition, the processor MCU is adapted to execute the instructions: (i) count electrical pulses N, which coming from the electrode of the ionization chamber K and which are amplified by the amplifier A; (ii) using at least one switch S, controllably periodically electrically connect the supply of electric energy from at least one electric battery to the voltage converter DC/DC and further in the circuit; (iii) determine the voltage value on the capacitor C and, upon reaching the previously set maximum value of the voltage using the switch S, electrically disconnect the supply of electric energy from the electric battery to the voltage converter DC/DC and further in the circuit. According to an embodiment of the invention, the processor MCU may be further adapted to execute instructions for determining the intensity of *alpha* radiation, guided by the received information about the number of electric pulses N coming from the electrode of the ionization chamber. The processor MCU can further contain instructions to control how long the charging of the capacitor C takes place and to determine when the voltage on the capacitor C and, therefore, the voltage of the ionization chamber K has reached a previously set maximum value.

According to another embodiment of the invention, the device comprises two switches: a first switch S1 and a second switch S2, the operation of which is controllable by a processor MCU. The first switch S1 in the electrical circuit is located before the voltage converter DC/DC, and the second switch S2 in the electrical circuit is located after the voltage converter DC/DC, but before the capacitor C and the ionization chamber K.

According to another embodiment of the invention, the device includes a diode D, which is located in the electrical circuit after the voltage converter DC/DC, but before the capacitor C and the ionization chamber K. Said device further includes a voltage divider made of resistors R1 and R2, which in the electrical circuit is located after the voltage converter DC/DC, but before the diode D; the point between the resistors R1 and R2 is electrically connected to the processor MCU, making it possible to detect the voltage on the capacitor C.

According to the embodiment, the voltage converter DC/DC is designed to have an output voltage in the range between 40 V and 200 V.

### Brief description of the drawings

Fig. 1 - one embodiment of the proposed battery powered pulse ionization chamber *alpha* particle sensor;
Fig. 2 - another embodiment of the proposed battery powered pulse ionization chamber *alpha* particle sensor.

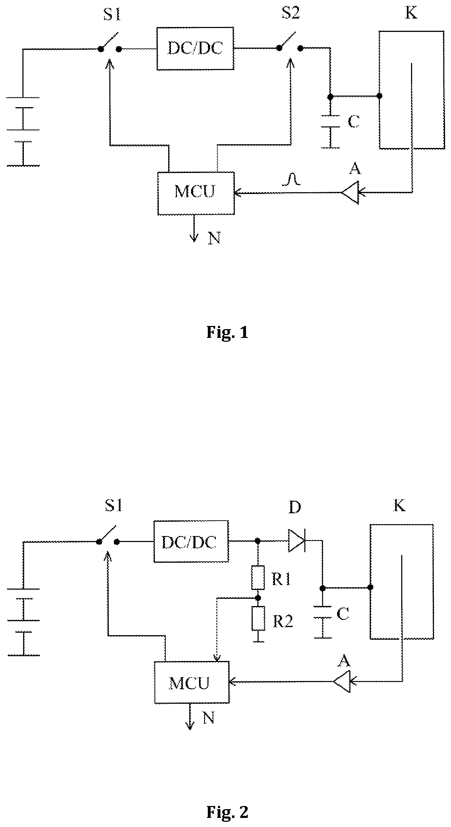

The proposed sensor is intended for the detection of low-intensity *alpha* particles. The proposed device consumes relatively little energy so that it can be powered by batteries for a long time. A source of *alpha* particles is placed in the ionization chamber K. *Alpha* particles ionize the gases in the air of the chamber K. By recording the ionization event, it is possible to record each *alpha* particle, thus also determine the intensity of the radiation. An electrode with zero potential is placed in the ionization chamber K, and its supply voltage is connected to the chamber (Fig. 1). The current pulse generated by the ions is amplified by amplifier A.

According to one of the embodiments of the invention, the processor MCU can have two modes, which have the following functions: (i) to process the signal of the amplifier A and count the number of pulses N in a time unit, which is proportional to the intensity of *alpha* radiation; (ii) measure the voltage applied to capacitor C and the time taken to charge it, and control the supply circuit based on the measured voltage value.

The supply voltage of the ionization chamber K must have minimal pulsation, i.e. such that it does not cause unwanted operation of the processor MCU at the output of the amplifier A. The desired value of the voltage must be within certain limits - from 40 to 200 V, because the sensitivity of the sensor depends on it. To meet these conditions, using as little energy as possible, the following technique can be used: from the battery voltage (which is usually in the range between 3 V and 6 V), the camera voltage is obtained by means of a voltage converter DC/DC, which is periodically connected to the battery voltage with switch S1 and with switch S2 at the capacitor C, which in turn is connected to the ionization chamber K (Fig. 1). At the moment of switching on (or changing the MCU mode of the processor), a pulse occurs at the output of the amplifier A, but it is not added to the total number of pulses N. The cycle period is chosen so that the voltage of the capacitor C is never less than the minimum selected voltage value. In this way, the self-consumption of the voltage converter is excluded from the analysis of the obtained data.

According to another embodiment, the voltage converter DC/DC is switched on and off by a processor MCU controlling the switch S1 (Fig. 2). At its output, there is a voltage divider of resistors R1 and R2, from which a voltage proportional to the output voltage of the voltage converter is supplied to the processor MCU. By means of the diode D, this voltage is connected to the capacitor C. When the set voltage value is reached, the processor MCU turns off the voltage converter, and the circuit operates in pulse counting mode for the specified period of time. By controlling how long the repeated charging of the capacitor C takes place at the end of this period, it can be indirectly concluded whether the voltage on the capacitor (and therefore the voltage of the chamber K) has not fallen below the permissible limit. This circuit implementation ensures that the voltage converter DC/DC is operated only long enough to restore the voltage value to C, thus not wasting unnecessary energy.

The proposed portable and autonomous device can be used to monitor radioactive contamination of the environment.

### References Cited

1. CN216351253U.
2. US4427946A.
3. WO2017034158A1.
4. CN1811376A.

## Claims

1. A device for detecting low-intensity *alpha* particles comprising at least one electric battery, at least one switch S, a voltage converter DC/DC, a capacitor C, a processor MCU, a current pulse amplifier A, an ionization chamber K with an electrode of zero potential placed therein, and the ionization chamber K is designed with the possibility of placing a source of *alpha* particles in it; wherein at least one electric battery is electrically connected to the voltage converter DC/DC by means of a switch S, the operation of which is controllable by the processor MCU; the voltage converter DC/DC is electrically connected to the capacitor C and the ionization chamber K; the electrode K of the ionization chamber is electrically connected to the processor MCU through the current pulse amplifier A; wherein the MCU processor is adapted to execute the instruction:
- count the electric pulses N coming from the electrode of the ionization chamber K and which are amplified by the amplifier A; said device being **characterized in that** said MCU processor is further adapted to execute the instruction:
- by means of at least one switch S, periodically electrically connect the supply of electric energy from at least one electric battery to the voltage converter DC/DC and further in the circuit, determine the voltage value on the capacitor C, and when reaching the previously set maximum value of the voltage, by means of a switch S, electrically disconnect the supply of electrical energy from the electric battery to the voltage converter DC/DC and further in the circuit.

2. The device according to claim 1, comprising two switches: a first switch S1 and a second switch S2, the operation of which is controllable by the processor MCU, wherein the first switch S1 is located in the electrical circuit before the voltage converter DC/DC, and the second switch is in the electrical circuit S2 is located after the voltage converter DC/DC, but before the capacitor C and the ionization chamber K.

3. The device according to claim 1, comprising a diode D located in the electrical circuit after the voltage converter DC/DC, but before the capacitor C and the ionization chamber K; said device further includes a voltage divider formed by resistors R1 and R2 and located in the electrical circuit after the voltage converter DC/DC but before diode D; the point between the resistors R1 and R2 is electrically connected to the processor MCU, making it possible to detect the voltage on the capacitor C.

4. The device according to any of the preceding claims, wherein the processor MCU is further adapted to execute instructions for determining the intensity of *alpha* radiation based on the received information about the number of electrical pulses N coming from the electrode of the ionization chamber.

5. The device according to any one of the preceding claims, wherein the voltage converter DC/DC is designed to have an output voltage in the range between 40 V and 200 V.

6. The device according to any of the preceding claims, wherein the processor MCU contains instructions to control the charging time of the capacitor C; and to determine the moment when the voltage on the capacitor C and therefore the voltage of the ionization chamber K has reached a previously set maximum value.

## Patentansprüche

1. Vorrichtung zum Nachweis von Alpha-Partikeln geringer Intensität, bestehend aus mindestens einer elektrischen Batterie, mindestens einem Schalter S, einem Spannungswandler DC/DC, einem Kondensator C, einer Prozessor-MCU, einem Stromimpulsverstärker A, einer Ionisationskammer K mit einer darin angeordneten Elektrode mit Nullpotential, wobei die Ionisationskammer K so ausgelegt ist, dass eine Quelle von Alphateilchen darin angebracht werden kann. Mindestens eine elektrische Batterie ist dabei über einen Schalter S elektrisch mit dem Spannungswandler DC/DC verbunden, dessen Betrieb durch den Prozessor MCU steuerbar ist. Der Spannungswandler DC/DC ist wiederum elektrisch mit dem Kondensator C und der Ionisationskammer K, und die Elektrode K der Ionisationskammer über den Stromimpulsverstärker A ist elektrisch mit der Prozessor-MCU verbunden. Der MCU-Prozessor ist dazu ausgelegt, den folgenden Befehl auszuführen:
- Die elektrischen Impulse N zählen, die von der Elektrode der Ionisationskammer K kommen und vom Verstärker A verstärkt werden. Die Prozessor-MCU der Vorrichtung ist ferner dazu ausgelegt, den folgenden Befehl auszuführen:
- Mittels mindestens eines Schalters S elektrischen Strom von mindestens einer elektrischen Batterie periodisch elektrisch dem Spannungswandler DC/DC und weiter dem Stromkreis zuzuführen, den Spannungswert am Kondensator C bestimmen und bei Erreichen des zuvor eingestellten Maximalwerts der Spannung mittels eines Schalters S die Zufuhr elektrischen Stroms von der elektrischen Batterie zum Spannungswandler DC/DC und weiter im Stromkreis elektrisch zu unterbrechen.

2. Vorrichtung gemäß Patentanspruch 1, bestehend aus zwei Schaltern: einem ersten Schalter S1 und einem zweiten Schalter S2, deren Betrieb durch die Prozessor-MCU steuerbar ist, wobei sich der erste Schalter S1 in dem Stromkreis vor dem Spannungswandler DC/DC und der zweite Schalter S2 in dem Stromkreis hinter dem Spannungswandler DC/DC befindet, jedoch vor dem Kondensator C und der Ionisationskammer K.

3. Vorrichtung gemäß Patentanspruch 1, bestehend aus einer Diode D, die sich im Stromkreis hinter dem Spannungswandler DC/DC, aber vor dem Kondensator C und der Ionisationskammer K befindet. Die Vorrichtung umfasst ferner einen Spannungsteiler, der aus den Widerständen R1 und R2 gebildet wird und sich im Stromkreis hinter dem Spannungswandler DC/DC, aber vor der Diode D befindet. Der Punkt zwischen den Widerständen R1 und R2 ist elektrisch mit der Prozessor-MCU verbunden, wodurch die Spannung am Kondensator C erfasst werden kann.

4. Vorrichtung gemäß einem der vorstehenden Patentansprüche, wobei die Prozessor-MCU ferner dazu ausgelegt ist, Befehle zur Bestimmung der Intensität der Alpha-Strahlung auf der Grundlage der empfangenen Informationen über die Anzahl der von der Elektrode der Ionisationskammer kommenden elektrischen Impulse N auszuführen.

5. Vorrichtung gemäß einem der vorstehenden Patentansprüche, wobei der Spannungswandler DC/DC eine Ausgangsspannung im Bereich zwischen 40 V und 200 V hat.

6. Vorrichtung gemäß einem der vorstehenden Patentansprüche, wobei die Prozessor-MCU Befehle enthält, um die Ladezeit des Kondensators C zu steuern und um den Zeitpunkt zu bestimmen, zu dem die Spannung am Kondensator C und damit die Spannung der Ionisationskammer K einen zuvor eingestellten Maximalwert erreicht hat.

## Revendications

1. Dispositif permettant de détecter des particules *alpha* de faible intensité comprenant au moins une batterie électrique, au moins un commutateur S, un convertisseur de tension CC/CC, un condensateur C, un processeur MCU, un amplificateur d'impulsions de courant A, une chambre d'ionisation K avec une électrode de potentiel nul placée dans celle-ci, et la chambre d'ionisation K est conçue avec la possibilité de mise en place d'une source de particules *alpha* dans celle-ci ; dans lequel au moins une batterie électrique est connectée électriquement au convertisseur de tension CC/CC au moyen d'un commutateur S, dont le fonctionnement est commandable par le processeur MCU ; le convertisseur de tension CC/CC est connecté électriquement au condensateur C et à la chambre d'ionisation K ; l'électrode K de la chambre d'ionisation est connectée électriquement au processeur MCU par le biais de l'amplificateur d'impulsions de courant A ; dans lequel le processeur MCU est adapté pour exécuter l'instruction :
- compter les impulsions électriques N venant de l'électrode de la chambre d'ionisation K et qui sont amplifiées par l'amplificateur A ; ledit dispositif étant **caractérisé en ce que** ledit processeur MCU est adapté en outre pour exécuter l'instruction :
- au moyen d'au moins un commutateur S, connecter électriquement de façon périodique l'alimentation d'énergie électrique allant d'au moins une batterie électrique au convertisseur de tension CC/CC et plus loin dans le circuit, déterminer la valeur de tension sur le condensateur C, et lorsque l'on atteint la valeur maximale précédemment réglée de la tension, au moyen d'un commutateur S, déconnecter électriquement l'alimentation d'énergie électrique allant de la batterie électrique au convertisseur de tension CC/CC et plus loin dans le circuit.

2. Dispositif selon la revendication 1, comprenant deux commutateurs : un premier commutateur S1 et un second commutateur S2, dont le fonctionnement est commandable par le processeur MCU, dans lequel le premier commutateur S1 est localisé dans le circuit électrique avant le convertisseur de tension CC/CC, et le second commutateur qui est dans le circuit électrique S2 est localisé après le convertisseur de tension CC/CC, mais avant le condensateur C et la chambre d'ionisation K.

3. Dispositif selon la revendication 1, comprenant une diode D localisée dans le circuit électrique après le convertisseur de tension CC/CC, mais avant le condensateur C et la chambre d'ionisation K ; ledit dispositif comporte en outre un diviseur de tension formé par des résistances R1 et R2 et localisé dans le circuit électrique après le convertisseur de tension CC/CC mais avant la diode D ; le point entre les résistances R1 et R2 est connecté électriquement au processeur MCU, rendant possible la détection de la tension sur le condensateur C.

4. Dispositif selon l'une quelconque des revendications précédentes, dans lequel le processeur MCU est adapté en outre pour exécuter des instructions permettant de déterminer l'intensité de rayonnement *alpha* en fonction des informations reçues concernant le nombre d'impulsions électriques N venant de l'électrode de la chambre d'ionisation.

5. Dispositif selon l'une quelconque des revendications précédentes, dans lequel le convertisseur de tension CC/CC est conçu pour avoir une tension de sortie dans la plage entre 40 V et 200 V.

6. Dispositif selon l'une quelconque des revendications précédentes, dans lequel le processeur MCU contient des instructions pour commander le temps de charge du condensateur C ; et pour déterminer le moment où la tension sur le condensateur C et, par conséquent, la tension de la chambre d'ionisation K a atteint une valeur maximale précédemment réglée.
